# EUROPÄISCHE PATENTSCHRIFT

(11) **EP 0 440 087 B1**
(45) Veröffentlichungstag und Bekanntmachung des Hinweises auf die Patenterteilung: **29.11.1995**
(21) Anmeldenummer: 91100887.8
(22) Anmeldetag: 24.01.1991
(51) Int. Cl.: G02B 6/42

(54) **Optische Signalverbindungsvorrichtung für Einschübe eines Einschubgestells**
Optical signal connecting device for plugs of a plug cabinet
Dispositif de connexion de signaux optiques pour les tiroirs d'un boîtier à tiroir

(30) Priorität: 02.02.1990 DE 4003056
(43) Veröffentlichungstag der Anmeldung: 07.08.1991
(73) Patentinhaber: Alcatel SEL Aktiengesellschaft, D-70435 Stuttgart (DE); ALCATEL N.V., NL-1077 XX Amsterdam (NL)
(72) Erfinder: Heidemann, Rolf, Dr., W-7146 Tamm (DE)
(74) Vertreter: Pohl, Herbert, Dipl.-Ing.

(56) Entgegenhaltungen:
- EP-A- 0 196 933
- EP-A- 0 237 237
- GB-A- 2 201 561
- IBM TECHNICAL DISCLOSURE BULLETIN. Bd. 26, Nr. 4, September 1983, NEW YORK US, Seiten 1793-1796 ; L. BALLIET et al. : 'Optical transmission system for interconnecting electronic units'
- PATENT ABSTRACTS OF JAPAN vol. 10, no. 179 (E-414)(2235) 24. Juni 1986 ; & JP-A-61 028 240
- PATENT ABSTRACTS OF JAPAN vol. 8, no. 44 (E-229)(1481) 25. Februar 1984 ; & JP-A-58 200 642
- PATENT ABSTRACTS OF JAPAN vol. 7, no. 84 (E-169)(1229) 8. April 1983 ; & JP-A-58 012 451

## Beschreibung

Die Erfindung betrifft ein Einschubgestell zur Herstellung von Kommunikationswegen zwischen Einschüben nach dem Oberbegriff des Anspruchs 1.

Eine derartige Anordnung ist aus der EP-A-0 196 933 bekannt. In einem Gehäuse (oder Gestell) sind verschiedene Einschübe eingesetzt, die außer den elektrischen Bauelementen jeweils mit einem optoelektrischen Wandler, d.h. einer Laser- oder Leuchtdiode und/oder einer Photodiode ausgerüstet sind. Die Dioden sind auf die Rückwand des Gehäuses gerichtet, welche quer zu den Einschüben ausgerichtet ist und eine Lichtwellen leitende, transparente Schicht aufweist. Die von den Licht emittierenden Dioden der Einschübe ausgesandten Strahlen dringen an den Koppelstellen in diese Schicht auf der Vorderseite ein und werden an der Rückseite in einem bestimmten Winkel ausgerichtet reflektiert. Durch mehrfache Reflexion an entsprechend präparierten Flächen werden die Strahlen jedes Strahlenbündels innerhalb der Schicht jeweils zu einer anderen Stelle geleitet, an der sie so reflektiert werden, daß sie die Schicht gebündelt wieder durch die Vorderseite verlassen. Der Fokus dieses Strahlenbündels liegt dann jeweils in einer Empfängerdiode eines Einschubs, zu dem auf diese Art Signale von einem anderen Einschub übermittelt werden können. Die Reflexionsstrukturen an den Koppelstellen werden vorzugsweise von einem holographischen Gitter gebildet.

Aus der EP-A-0 237 237 ist eine Anordnung von Einschüben in einem Gehäuse bekannt, bei der vor der Gehäuse-Rückwand leistenförmige Lichtwellenleiter angebracht sind. Die plattenförmigen Einschübe sind wiederum mit optischen Koppelvorrichtungen (Sender- und Empfängerdioden, Linsen usw.) ausgerüstet, die optische Signale in den Lichtwellenleiter ein- oder aus ihm auskoppeln. An den Koppelstellen sind im Lichtwellenleiter geneigte (prismatische) Flächen vorgesehen, an denen die Lichtstrahlen rechtwinklig abgelenkt werden.

Ferner ist es bekannt, den Lichtwellenleiter als Kernschicht zwischen zwei transparenten Deckschichten anzuordnen. Auf diese Weise können auch mehrschichtige Lichtwellenleiter gebildet werden. An den Koppelstellen sind reflektierende Kegel eingesetzt, die das Licht in den bzw. aus dem Lichtwellenleiter koppeln. Den Kegeln gegenüber sitzen in elektronischen Baugruppen die Lichtsignale sendenden bzw. empfangenden Dioden. Der flächige Lichtwellenleiter ermöglicht es, mehrere Baugruppen oder Geräte mit Empfängerdioden auszurüsten, welche alle die Signale desselben oder derselben Sender(s) empfangen (IBM Technical Disclosure Bulletin, Bd. 26, Nr. 4, Sept. 1983, Seiten 1793 ... 1796).

Der Erfindung liegt die Aufgabe zugrunde, ein Einschubgestell der eingangs genannten Art zu schaffen, das sehr einfach aufgebaut, für höchste Signalgeschwindigkeiten geeignet ist und eine sehr geringe Koppeldämpfung aufweist. Gelöst wird diese Aufgabe durch die im Anspruch 1 angegebenen Merkmale. Diese Lösung hat den Vorteil, daß der Abstand der einzelnen Spalten des Gitters auf die Wellenlänge des im Lichtwellenleiter laufenden Lichtes abgestimmt und damit der Wirkungsgrad an den Koppelstellen optimiert werden kann. Als Gitter kann ein Sinusgitter, ein Dreiecksgitter oder ein Sägezahngitter verwendet werden. Außerdem ist die Periode des Gitters über seine Längserstreckung unterschiedlich.

Der Lichtwellenleiter kann, wie üblich, ganzflächig auf oder in der Trägerfolie ausgebildet sein und den Träger ganz oder nur in Teilbereichen bedecken. Er kann jedoch auch gemäß einer weiteren Ausgestaltung nach der Erfindung als Streifen in oder auf der Folie ausgebildet sein. Hierdurch läßt sich eine Punkt-zu-Punkt-Verbindung herstellen, das heißt, eine konkrete Verbindung von einem bestimmten Einschub zu einem anderen Einschub. Sofern mehrere Einschübe untereinander verbunden werden sollen, können mehrere als Streifen ausgebildete Lichtwellenleiter der Rückwand zugeordnet sein. Kommt es dabei zu Kreuzungen der einzelnen Streifen-Lichtwellenleiter, so werden diese in unterschiedlichen Schichten der Trägerfolie ausgebildet.

Ferner können Durchbrüche zur Aufnahme von Leiterbahnen in der Trägerfolie vorgesehen sein. Die Leiterbahnen werden auf der den Einschüben zugewandten Seite des Trägers anordnet und sind von Federkontakten der Einschübe beaufschlagt. Hierdurch läßt sich z.B. die Versorgungsspannung zu den einzelnen Einschüben führen. Möglich sind jedoch auch auf diese Art ausgebildete Kommunikationswege, die zusätzlich zu den erfindungsgemäßen, optischen Signalverbindungen bestehen.

Die Zeichnungen veranschaulichen die Erfindung anhand von Ausführungsbeispielen und zwar zeigt:
- Figur 1: eine schematische Seitenansicht eines mit zwei Einschüben versehenen Einschubgestells;
- Figur 2: eine Draufsicht auf eine mit Lichtwellen leiter versehene Rückwand des Einschubgestells;
- Figur 3: eine Rückwand, die streifenförmige Lichtwellenleiter aufweist und
- Figur 4: eine Ausbildung als Multiplexverbindung.

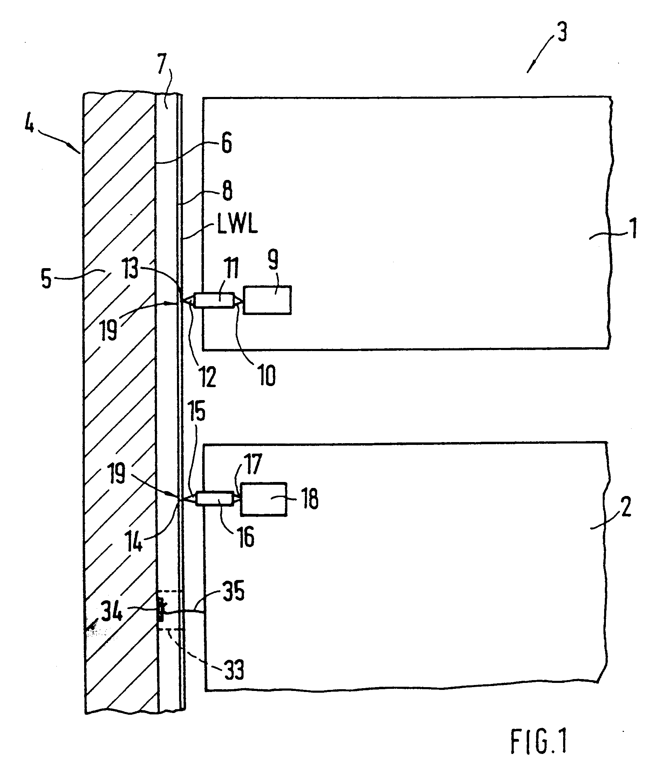

Die Figur 1 zeigt eine schematische Seitenansicht zweier Einschübe 1 und 2, die in ein (nicht dargestelltes) Gestell eingeschoben sind. Die beiden Einschübe 1 und 2 befinden sich in Einschubstellung. Die Einschübe 1 und 2 weisen elektronische Schaltungen auf, die z.B. einer Breitband-Vermittlungseinrichtung angehören.

Es ist eine Signalverbindungsvorrichtung 3 vorgesehen, mit der Kommunikationswege zwischen den Einschüben 1 und 2 hergestellt sind. Das Breitband-Vermittlungssystem kann selbstverständlich aus mehr als nur zwei Einschüben bestehen, zur Verdeutlichung der Erfindung reicht es jedoch aus, lediglich auf die Einschübe 1 und 2 einzugehen.

Die Signalverbindungen der Kommunikationswege zwischen den Einschüben 1 und 2 sind als Lichtwellenleiter LWL ausgebildet. Bei der Erstellung der Kommunikationswege wird die Rückwand 4 des Einschubgestells einbezogen. Hierzu weist die Rückwand einen plattenförmig ausgebildeten Träger 5 auf, der eine mechanische Stütze bildet. Auf seiner den Einschüben 1 und 2 zugewandten Seite 6 ist ganzflächig eine Trägerfolie 7 aufgebracht, die auf ihrer den Einschüben 1 und 2 zugewandten Seite 8 einen flächigen Lichtwellenleiter LWL trägt.

Nach einem anderen, nicht dargestellten Ausführungsbeispiel, ist es auch möglicht, daß der Lichtwellenleiter LWL in der Trägerfolie 7 eingebettet ist.

Es sei angenommen, daß von dem Einschub 1 eine Information zum Einschub 2 übertragen werden soll. Hierzu weist der Einschub 1 ein Laserdioden-Modul auf. Es ist z.B. auch der Einsatz eines LED-Moduls denkbar. Das vom Laserdioden-Modul 9 erzeugte Licht 10 wird zu einer Abbildungsoptik 11 übertragen, die beispielsweise als Selfoc-Linse ausgebildet ist. Das gebündelte Licht 12 trifft an einer Einkoppelungsstelle 13 auf den flächig ausgebildeten Lichtwellenleiter LWL und wird demzufolge bis zu einer Auskoppelungsstelle 14 übertragen. Das von dort ausgehende Licht 15 wird wiederum mittels einer Abbildungsoptik 16 gebündelt, wobei das gebündelte Licht 17 einem Fotodioden-Modul 18 zugeleitet wird.

Während das Laserdioden-Modul 9 als Sender arbeitet, stellt das Fotodioden-Modul 18 einen Empfänger dar.

An den Ein- und Auskoppelstellen 13 und 14 können am Lichtwellenleiter LWL Koppelstrukturen 19 vorgesehen sein. Dies ist insbesondere dadurch möglich, daß dort jeweils ein optisches Gitter, insbesondere ein holographisches Gitter, ausgebildet ist. Dieses Gitter kann bevorzugt ein Sinusgitter, nach einem weiteren Ausführungsbeispiel jedoch auch ein Dreiecksgitter oder aber nach einem weiteren Ausführungsbeispiel ein Sägezahngitter sein. Dabei ist insbesondere derart vorgegangen, daß die Periodizität des Gitters (der Abstand der einzelnen Spalte des Gitters) auf die Wellenlänge des im Lichtwellenleiter LWL laufenden Lichts abgestimmt ist. Insbesondere hat das jeweilige Gitter -über seine Ausbreitung gesehen- eine unterschiedliche Periodizität, das heißt, unterschiedliche Abstände zwischen den Einzelspalten. Stets ist dabei angestrebt, daß das Licht mit hohem Wirkungsgrad in den Lichtwellenleiter LWL eingekoppelt und ebenfalls mit hohem Wirkungsgrad ausgekoppelt wird. Da die Form und die Richtung des an der Koppelungsstelle mittels des Gitters ein- und ausgekoppelten Lichtstrahles von der Wellenlänge des Lichtes abhängt, sind so auch Wellenlängenmultiplex-Verbindungen möglich. Beispielsweise arbeiten dann zwei Sender und zwei (oder mehr) Empfänger auf unterschiedlichen Wellenlängen über einen Lichtwellenleiter (unidirektionaler Betrieb). Weiterhin ist auch bidirektionaler Betrieb möglich, wobei zwei unterschiedliche Wellenlängen dann der Richtungstrennung dienen. Auf jedem Einschub befindet sich dann sowohl ein Sender als auch ein Empfänger.

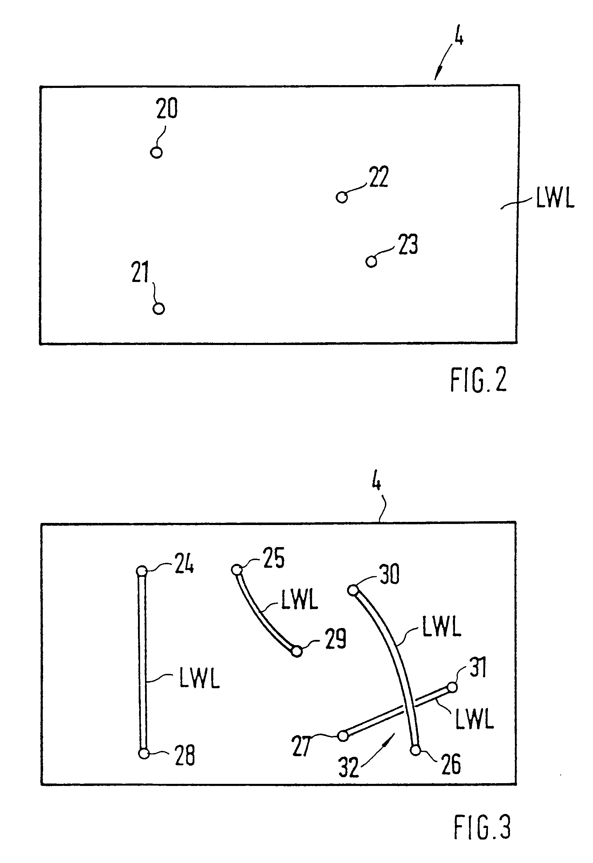

Durch den flächig ausgebildeten Lichtwellenleiter LWL ist es gemäß Figur 2 möglich, z.B. an der dort dargestellten Einkoppelstelle 20 Licht einzuspeisen und an den Auskoppelungsstellen 21,22 und 23 Licht für die Zuleitung zu entsprechenden Einschüben auszukoppeln. Es handelt sich dann um eine sogenannte Punkt-zu-Multipunkt-Verbindung, das heißt, in einem Punkt wird eingespeist und an mehreren Punkten entnommen.

In entsprechender Weise ist es auch möglich, Multipunkt-zu-Multipunkt-Verbindungen zu erstellen, das heißt, an vielen Punkten wird eingespeist und an vielen Punkten auch wieder entnommen. Schließlich kann die Anordnung auch derart ausgebildet sein, daß an vielen Punkten eingespeist und nur an einem Punkt entnommen wird. Es handelt sich dann um eine Multipunkt-zu-Punkt-Verbindung.

Die Figur 3 zeigt eine weitere Rückwand 4, die gegenüber der der Figur 2 keinen vollflächigen Lichtwellenleiter LWL, sonderen streifenförmige Lichtwellenleiter LWL aufweist. Hierdurch lassen sich Einkoppelungsstellen 24,25,26 und 27 mit Auskoppelungsstellen 28,29,30 und 31 verbinden, die jeweils -wie bereits in der Figur 1 beschrieben- entsprechenden Abbildungsoptiken der zugehörigen Einschübe gegenüberliegen. Ansonsten entspricht der Aufbau der Rückwand 4 der Figur 3 dem in der Figur 1. Sich kreuzenden Lichtwellenleiter 32 sind in unterschiedlichen Schichten der Trägerfolie 7 der Rückwand 4 untergebracht, so daß keine gegenseitige Beeinflussung stattfindet.

Aus Figur 1 ist ferner ersichtlich, daß in der Trägerfolie 7 Durchbrüche 33 ausgebildet sein können, in denen Leiterbahnen 34 liegen. Diese sind auf der Seite 6 des Trägers 5 angeordnet. Sie wirken mit Federkontakten 35 der Einschübe 1 beziehungsweise 2 zusammen (beim Einschub 1 nicht dargestellt). Durch diese Maßnahmen lassen sich elektrische Verbindungswege zwischen den Einschüben 1 und 2 herstellen. überdies können diese elektrischen Kontaktverbindungen für die Zuführung der Versorgungsspannung verwendet werden.

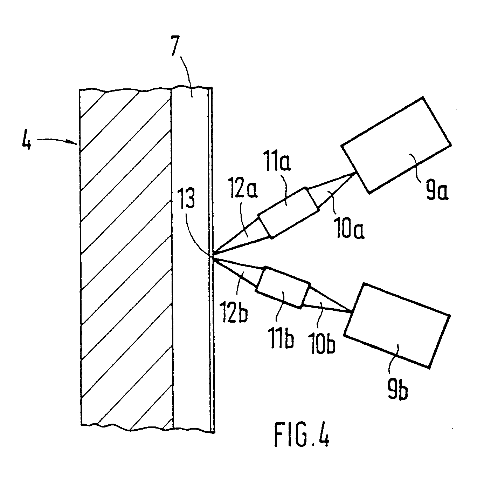

Da -wie bereits erwähnt- die Form und die Richtung des an der Einkoppelungsstelle 13 mittels des Gitters ein- und ausgekoppelten Lichtstrahls von der Wellenlänge des Lichts abhängt, sind auch Wellenlängenmultiplex-Verbindungen möglich. Dies ist in der Figur 4 dargestellt. Hier arbeiten beispielsweise zwei Laserdioden-Module 9a, 9b als Sender oder Empfänger auf unterschiedlichen Wellenlängen über einen Lichtwellenleiter (unidirektionaler Betrieb). Jedoch ist -wie bereits erwähnt- auch ein bidirektionaler Betrieb dann möglich, wenn eine Richtungstrennung mittels der unterschiedlichen Wellenlängen erfolgt. Auf jedem Einschub befindet sich dann sowohl ein Sender als auch ein Empfänger. In der Figur 4 sind die Abbildungsoptiken mit 11a beziehungsweise 11b gekennzeichnet. Das Licht trägt die Bezugszeichen 10a, 10b beziehungsweise 12a und 12b. Die Lichtwellenmultiplexer sind inhärenter Bestandteil der Lichtwellenleiter-Ein- und Ausgänge. Dies bedeutet, daß sie nicht Bestandteil von auswechselbaren Baugruppen (Einschüben) sind.

## Patentansprüche

1. Einschubgestell zur Herstellung von Kommunikationswegen zwischen Einschüben (1, 2), mit einem Lichtwellenleiter (LWL), der einer Rückwand (4) des Gestells zugeordnet ist, wobei die Kopplung des Lichtwellenleiters mit den Einschüben (1, 2) durch in Einschubstellung erfolgende Gegenüberlage oder Anlage von Abbildungsoptiken (11, 16) der Einschübe (1, 2) zum Lichtwellenleiter (LWL) erfolgt, indem an den Ein- und Auskoppelstellen (13, 14; 20, 21, 22, 23; 24, 25, 26, 27, 28, 29, 30, 31) eine Koppelstruktur (19) in dem Lichtwellenleiter (LWL) ausgebildet ist, die von einem Gitter, insbesondere holographischen Gitter gebildet ist,
**dadurch gekennzeichnet**, daß der Lichtwellenleiter (LWL) auf oder in einer Trägerfolie (7) angeordnet ist, die sich auf einem Träger (5) der Rückwand (4) befindet, daß sich die Periode des Gitters über seine Längserstreckung verändert, so daß aufgrund des wellenlängenabhängigen Beugungsverhaltens des Gitters mehrere Signale unterschiedlicher Wellenlängen in den Lichtwellenleiter (LWL) einkoppelbar bzw. auskoppelbar sind, wodurch mindestens zwei optische Sender und/oder mindestens zwei optische Empfänger auf einem Einschub (1, 2) angeordnet sein können.

2. Einschubgestell nach Anspruch 1, dadurch gekennzeichnet, daß das Gitter als Sinusgitter ausgebildet ist.

3. Einschubgestell nach Anspruch 1, dadurch gekennzeichnet, daß das Gitter als Dreiecksgitter ausgebildet ist.

4. Einschubgestell nach Anspruch 1, dadurch gekennzeichnet, daß das Gitter als Sägezahngitter ausgebildet ist.

5. Einschubgestell nach Anspruch 1, gekennzeichnet durch einen aufgrund der unterschiedlichen Wellenlängen erfolgenden, bidirektionalen Betrieb zwischen mindestens zwei Einschüben (1, 2).

6. Einschubgestell nach Anspruch 1, dadurch gekennzeichnet, daß der/die Lichtwellenleiter (LWL) als Streifen auf oder in der Trägerfolie (7) ausgebildet ist/sind.

7. Einschubgestell nach Anspruch 6, dadurch gekennzeichnet, daß sich kreuzende Streifen-Lichtwellenleiter (LWL) in unterschiedlichen Schichten der Trägerfolie (7) befinden.

8. Einschubgestell nach einem der vorhergehenden Ansprüche, dadurch gekennzeichnet, daß die Trägerfolie (7) Durchbrüche (33) zur Aufnahme von elektrischen Leiterbahnen (34) aufweist, die auf der den Einschüben (1, 2) zugewandten Seite (6) des Trägers (5) angeordnet sind und von Federkontakten (35) der Einschübe (1, 2) beaufschlagbar sind.

## Claims

1. Module rack for the establishment of communication paths between plug-in modules (1, 2), having an optical waveguide (LWL) that is assigned to a backplane (4) of the rack, whereby the coupling of the optical waveguide to the plug-in modules (1, 2) is effected in the inserted position by focussing optics (11, 16) of the plug-in modules (1, 2) being opposite or in contact with the optical waveguide (LWL), in that a coupling structure (19) which is formed by a grating, in particular holographic gratings, is constructed in the optical waveguide (LWL) at injection and decoupling points (13, 14; 20, 21, 22, 23; 24, 25, 26, 27, 28, 29, 30, 31), **characterised in that** the optical waveguide (LWL) is arranged on or in a supporting film (7) which is located on a support (5) of the backplane (4), that the period of the grating varies over its longitudinal extension, so that due to the wavelength-dependent diffraction characteristics of the grating, several signals of differing wavelengths can be injected into or decoupled from the optical waveguide (LWL), whereby at least two optical transmitters and/or at least two optical receivers can be arranged on one plug-in module (1, 2).

2. Module rack according to Claim 1, characterised in that the grating is constructed as a sinusoidal grating.

3. Module rack according to Claim 1, characterised in that the grating is constructed as a triangular grating.

4. Module rack according to Claim 1, characterised in that the grating is constructed as a sawtooth grating.

5. Module rack according to Claim 1, characterised by bidirectional operation between at least two plug-in modules (1, 2) due to the differing wavelengths.

6. Module rack according to Claim 1, characterised in that the optical waveguide/waveguides (LWL) is/are constructed as strips or is/are constructed in the supporting foil (7).

7. Module rack according to Claim 6, characterised in that crossing strip-type optical waveguides (LWL) are located in different layers of the supporting foil (7).

8. Module rack according to one of the preceding Claims, characterised in that the supporting foil (7) has openings (33) to receive electrical printed conductors (34) that are arranged on the side (6) of the support (5) facing the plug-in modules (1, 2) and can be contacted by spring contacts (35) of the plug-in modules (1, 2).

## Revendications

1. Baie à tiroirs pour réaliser des chemins de communication entre les tiroirs (1, 2) avec un guide d'ondes lumineuses (LWL) qui correspond à une paroi arrière (4) de la baie, le couplage du guide d'ondes lumineuses avec les tiroirs (1, 2) résultant du fait qu'en position insérée des tiroirs, les optiques de formation d'image (11, 16) des tiroirs (1, 2) viennent en face du guide d'ondes lumineuses (LWL) ou en appui contre ce guide d'ondes lumineuses, en ce sens qu'aux positions de couplage et de découplage (13, 14; 20, 21, 22, 23; 24, 25, 25, 26, 27, 28, 29, 30, 31), dans le guide d'ondes lumineuses (LWL) est prévue une structure de couplage (19) qui est formée d'une grille, en particulier d'une grille holographique,
caractérisée par le fait que le guide d'ondes lumineuses (LWL) est disposé sur une ou dans une feuille support (7) qui se trouve sur un support (5) de la paroi arrière (4), que la période de la grille se modifie sur son extension longitudinale, de sorte que, du fait que le comportement de la grille en diffraction dépend de la longueur d'onde, plusieurs signaux de longueurs d'onde différentes peuvent être couplés ou découplés dans le guide d'ondes lumineuses (LWL), de sorte qu'au moins deux émetteurs optiques et/ou au moins deux récepteurs optiques peuvent être disposés sur un tiroir (1, 2).

2. Baie à tiroirs selon la revendication 1, caractérisée par le fait que la grille est conçue en tant que grille en sinus.

3. Baie à tiroirs selon la revendication 1, caractérisée par le fait que la grille est conçue en tant que grille en triangle.

4. Baie à tiroirs selon la revendication 1, caractérisée par le fait que la grille est conçue en tant que grille en dents de scie.

5. Baie à tiroirs selon la revendication 1, caractérisée par une exploitation bidirectionnelle, qui se fait du fait des longueurs d'ondes différentes, entre au moins deux tiroirs (1, 2).

6. Baie à tiroirs selon la revendication 1, caractérisée par le fait que le/les guides d'ondes lumineuses (LWL) est conçu/sont conçus sous forme de ruban(s) sur ou dans la feuille support (7).

7. Baie à tiroirs selon la revendication 6, caractérisée par le fait que des guides d'ondes lumineuses -rubans (LWL) qui se croisent se trouvent dans des couches différentes de la feuille support (7).

8. Baie à tiroirs selon l'une des revendications précédentes, caractérisée par le fait que la feuille support (7) présente des découpes (33) pour recevoir des rubans conducteurs électriques (34) qui sont disposés sur la face (6) du support (5) orientée vers les tiroirs (1, 2) et peuvent être contraints par des contacts élastiques (35) des tiroirs (1, 2).
